# EUROPEAN PATENT APPLICATION

(11) **EP 4 542 301 A1**
(43) Date of publication of application: **23.04.2025**
(21) Application number: 23867177.0
(22) Date of filing: 15.08.2023
(51) Int. Cl.: G03B 21/58

(54) **SUPPORTING STRUCTURE FOR DISPLAY SCREEN, AND DISPLAY SCREEN**

(30) Priority: 21.09.2022 CN 202211149232; 25.05.2023 CN 202310600602; 25.05.2023 CN 202321294993 U
(71) Applicant: Chengdu FScreen Sci-Tech Co., Ltd, Chengdu, Sichuan 611731 (CN)
(72) Inventor: ZHANG, Yimin, Chengdu, Sichuan 611731 (CN); CHEN, Zhichao, Chengdu, Sichuan 611731 (CN); HU, Shijia, Chengdu, Sichuan 611731 (CN)
(74) Representative: RavensPAT Patentanwälte Partnerschaft mbB
(86) International application number: PCT/CN2023/113054
(87) International publication number: WO 2024/060883

(57) **Abstract**

A supporting structure for display screen and a display screen are disclosed. The supporting structure for the display screen comprises a plurality of supporting units connected in sequence, wherein the supporting unit comprises an angular plate structure. The apex ridges of the angular plate structures serve as supporting parts and are distributed at intervals to form a supporting surface. With the supporting structure for display screen, the projection surface of the display screen is well tensioned to avoid the situations of curling, bending, etc., thereby ensuring the flatness of the projection surface and avoiding overall or partial deformation of the displayed images. The display screen can provide a suitable flattening force to the screen panel, avoiding deformation problems such as curling, bending and the like at its edges, thereby ensuring the flatness of the screen panel.

## Description

The present application claims the priority of the Chinese patent application number 202211149232.4, filed with the Chinese Patent Office on September 21, 2022, entitled "A ROLLABLE PROJECTION SCREEN AND PROJECTION SYSTEM", the priority of the Chinese patent application number 202310600602.X, filed with the Chinese Patent Office on May 25, 2023, entitled "A DISPLAY SCREEN", and the priority of the Chinese patent application number 202321294993.9, filed with the Chinese Patent Office on May 25, 2023, entitled "SUPPORTING STRUCTURE FOR DISPLAY SCREEN", and the entire contents of which are incorporated by reference into this application.

### FIELD OF THE INVENTION

The invention belongs to the field of display screens, and in particular relates to a supporting structure for a display screen and a display screen itself.

### BACKGROUND OF THE INVENTION

Whether the projection surface of the display screen is flat or not is related to whether the projection effect of the display screen is good or not. If the projection surface of the display screen is curled or curved, it can cause the overall or partial deformation of the displayed image, seriously affecting the user's viewing experience.

For fixed screens, rubber band method, frame method and pasting method are usually used to ensure the flatness of the screen, but the processing is cumbersome and difficult. For rollable display screens, a counterweight rod is usually configured at the lower end of the display screen. After the roll-up display screen is unfolded, the counterweight rod provides the display screen with vertical force to achieve flattening of the display screen. However, this flattening method has little effect on the horizontal direction of the display screen. As a result, after the display screen is unfolded, it still has deformation problems such as curling and bending in the horizontal direction, which seriously affects the flatness of the screen and thus affects the display effect.

### SUMMARY OF THE INVENTION

In order to solve the above technical problems, in a first aspect, the present invention discloses a supporting structure for a display screen, which can achieve good tensioning of the projection surface of the display screen to avoid curling, bending, etc., thereby ensuring the flatness of the projection surface and avoiding overall or partial deformation of the displayed image. In a second aspect, the present invention also discloses a display screen, which can give a suitable flattening force to the screen sheet to avoid deformation problems such as curling, bending, etc. at its edge, so as to ensure the flatness of the screen sheet.

The specific technical solutions of the present invention are as follows:

In a first aspect, a supporting structure for a display screen includes:

A plurality of supporting units connected in sequence, wherein the supporting unit includes an angular plate structure, and the apex ridges of the angular plate structures serve as supporting parts and are distributed at intervals to form a supporting surface.

Since the apex ridges of all the angular plate structures form a supporting surface, it can be seen that each apex ridge is in contact with the display screen. The stability of the force in the extension direction may be ensured by the straightness of the apex ridges, and on this basis, deformation problems such as curling and bending of the display screen in this direction can be avoided. Consequently, no matter whether the display screen is a fixed screen or a rollable, the linear connection relationship of each apex ridge in the supporting surface can be used to achieve the flatness of the display screen.

Preferably, the supporting surface includes a planar surface and a curved surface or a combination thereof.

This design allows the supporting surface to accommodate display screens of various shapes, meeting diverse user needs.

Preferably, in any two adjacent angular plate structures, two side plates close to each other form a reverse angular plate structure.

The reverse angular plate structure combined with the angular plate structure can further improve the support stability. The reverse angular plate structure and the display screen are combined to form a triangular stable structure, which can better improve the stability of the angular plate structure, maintain the angle stability of the angular plate structure, ensure the straightness and bending resistance of the apex ridge, avoid the angular plate structure from shaking relative to the display screen, ensure the connection stability between the angular plate structure and the display screen, and avoid the apex ridge from being separated from the display screen due to shaking or twisting of the angular plate structure, thereby maintaining the long-term stable flatness of the display screen under the action of the apex ridge.

Preferably, the apex ridges of all the angular plate structures are parallel to each other to form a rollable supporting surface.

When the display screen is flexible and rollable, the apex ridges of all the angular plate structures are parallel to each other, and the apex ridges are aligned with the axis of the scroll axis of the display screen, the display screen can be rolled up and stored, thereby reducing the occupied space and improving convenience. At the same time, since the apex ridges are aligned with the axis of the scroll axis of the display screen, the flatness of the display screen is effectively guaranteed in the axis of the scroll axis, thereby improving the display effect.

Preferably, the supporting structure is formed by bending the sheet material forward and reversely to form continuously arranged supporting units.

Multiple supporting units connected in sequence are processed from a whole piece of sheet material. While ensuring the straightness requirement, the process can be simplified and the degree of lightweight can be high. The flatness of the display screen can be improved while the weight increase can be greatly reduced. In the prior art, a long reinforcing strip with a certain cross-sectional area is usually connected to the back of the display screen to increase the flatness of the display screen. The straightness and bending resistance of the reinforcing strip itself are usually improved by increasing the cross-sectional area or selecting a material with higher strength, thereby increasing the weight of the reinforcing strip, which will greatly increase the overall weight of the display screen. The present invention uses a sheet material, bending the sheet to form an angular plate structure of the supporting unit. The sheet is light in weight, greatly reduces weight increase, achieves lightweight, and has low requirements on the structural strength of the sheet itself. The sheet is bent to form an angular plate structure, and the apex ridge of the angular plate structure has significantly enhanced straightness and bending resistance compared to the structural strength of the sheet itself. The originally weak sheet is enhanced through bending to be a supporting unit with straightness and bending resistance that meet the requirements, whereas a simple result is achieved, the process is easy, and the cost is low.

Preferably, the angular plate structure is provided with a first groove along the extension direction of the apex ridge on the inner side or the outer side of the bending part thereof.

The first groove forms an easy-to-bend portion, which is conducive to the bending process. On this basis, it plays a role in clearly marking the portion that needs to be bent, ensuring the accuracy of the bending position. In addition, the bending angle between the two side walls can be accurately controlled by the first groove.

Preferably, an adhesive is applied between the two side walls of the angular plate structure.

The adhesive applied between the two side walls of the angular plate structure can provide better elastic deformation ability for the two side walls of the angular plate structure to maintain structural stability.

Preferably, the reverse angular plate structure is provided with a second groove along the extension direction of the reverse apex ridge on the inner side or the outer side of the bending part thereof.

Similarly, the second groove can form an easy-to-bend portion, which is conducive to the bending process. On this basis, it plays a role in clearly marking the portion that needs to be bent, ensuring the accuracy of the bending position. In addition, the bending angle between the two side walls can also be accurately controlled by the second groove.

Preferably, an adhesive is applied between the two side walls of the reverse angular plate structure.

The adhesive applied between the two side walls of the reverse angular plate structure can provide the two side walls of the reverse angular plate structure with better elastic deformation ability to maintain structural stability.

Preferably, the angular plate structure has a third groove at the apex ridge, which is arranged along the extension direction of the apex ridge.

The angular plate structure can be bonded to the display screen by adding adhesive into the third groove. At this time, the connection stability can be guaranteed on the basis of ensuring linear connection. Since the third groove is formed on the apex ridge and the adhesive is applied in the third groove, the apex ridge parts on both sides of the third groove can be fully and evenly contacted and connected with the display screen over the entire length of the apex ridge. Then the entire length of the apex ridge is bonded to the display screen by the adhesive, thereby improving the uniformity of the connection between the apex ridge and the display screen over the entire length. When the third groove is not provided and the adhesive is directly applied between the apex ridge and the display screen, it is difficult to uniformly control the amount of adhesive between the apex ridge and the display screen in the length direction of the apex ridge, and it is easy to have a situation where the adhesive thickness is large in some sections and small in some sections. As a result, there is a situation where the portion with large adhesive thickness is slightly protruded relative to the portion with small adhesive thickness in the length direction of the apex ridge, which has an adverse effect on the flatness of the display screen.

Preferably, the apex angle of the angular plate structure is not greater than 120°, and the widths of the two side walls of the angular plate structure are equal; all the angular plate structures are consistent in shape and size.

On the basis of ensuring linear connection, the consistency of the overall structure when it is deformed should also be ensured. Therefore, this requirement can be met when the apex angle range of the angular plate structure is not greater than 120°. When the widths of the two side walls of the angular plate structure are equal, for any angular plate structure, in the unfolded state of the display screen, if the ends of the two side walls of the angular plate structure away from the apex ridge are connected, the longitudinal section of the formed structure is an isosceles triangle, which is not only conducive to material weight reduction, but also has the advantages of good structural stability and easy processing. When all angular plate structures are of a unified standard, they can be easily processed and formed, and at the same time provide a more uniform force for the display screen, ensuring that the display screen maintains flatness in its current state through the linear connection of the apex ridge.

Compared with the prior art, the present invention uses the apex ridges of the angular plate structure to form a supporting surface through all the apex ridges, so that the projection surface of the display screen is supported. As a result, under the influence of the supporting structure, a flattening force is obtained in the extension direction of the apex ridges, thereby avoiding deformation problems such as curling and bending on the projection surface of the display screen.

In a second aspect, a display screen includes:

A screen panel and a supporting structure;

Wherein the supporting structure comprises a plurality of supporting units;

The supporting unit comprises an angular plate structure, and the apex ridge of the angular plate structure is attached to the back side of the screen panel.

The apex ridge of the angular plate structure determines the flatness of the screen panel at the position where the apex ridge is located. Since the apex ridge is linear, the linear connection relationship between the angular plate structure and the screen panel is satisfied in the extension direction of the apex ridge. The apex ridge of the angular plate structure has good straightness and bending resistance, thereby avoiding deformation of the screen panel in the direction of the apex ridge and improving the flatness of the screen panel in the direction of the apex ridge.

Preferably, the directions of the apex ridges of the angular plate structures include multiple non-parallel directions.

Alternatively, the screen panel is flexible and rollable, and the apex ridges of all the angular plate structures are parallel to each other, and the apex ridges are consistent with the rolling axis of the screen panel.

When the extension directions of the apex ridges of the angular plate structure are non-parallel to each other, it can be used for screen panels with regular structures or screen panels with special-shaped structures. When the screen panel is flexible and rollable, and the apex ridges of all the angular plate structures are parallel to each other, and the apex ridges are consistent with the curling axis direction of the screen panel, the display screen can be rolled up and stored, which reduces the occupied space and improves the convenience. At the same time, since the apex ridges are consistent with the curling axis direction of the screen panel, the flatness of the display screen is effectively guaranteed in the curling axis direction, thereby improving the display effect.

Preferably, in any two adjacent angular plate structures, two side walls that are close to each other are connected.

The above-mentioned two side walls can be directly connected or transitionally connected through an intermediate component, which can keep the angular plate structure stable relative to the screen panel, avoid shaking of the two side walls of the angular plate structure, and keep the angle of the angular plate structure stable, thereby improving the stability of the angular plate structure, and then ensuring the straightness and bending resistance of the apex ridge, that is, ensuring the flatness of the screen panel in the direction of the apex ridge.

Preferably, in any two adjacent angular plate structures, the two side walls close to each other form an inverse angular plate structure.

Preferably, the supporting structure is formed by bending the sheet material forward and reversely to form continuously arranged supporting units.

Preferably, the angular plate structure is formed by bending a sheet material.

The angular plate structure can be completely processed by a sheet alone. This approach ensures a lightweight design while meeting straightness requirements. The original low-strength material is bent into a supporting unit that meets the straightness and bending resistance requirements. The structure is simple and it is easy to implement.

Preferably, the angular plate structure is provided with a first groove along the extension direction of the apex ridge on the inner side or the outer side of the bending part thereof.

Preferably, an adhesive is applied between the two side walls of the angular plate structure.

Preferably, the reverse angular plate structure is provided with a second groove along the extension direction of the apex ridge on the inner side or the outer side of the bending part thereof.

Preferably, an adhesive is applied between the two side walls of the reverse angular plate structure.

Preferably, the apex ridge of the angular plate structure is bonded to the screen panel.

By connecting the screen panel with the apex ridge by bonding, the connection stability of the angular plate structure can be enhanced, the connection is convenient, and the screen panel can be fully attached and connected with the apex ridge of the angular plate structure, so that the screen panel has good flatness under the support of the apex ridge.

Preferably, the angular plate structure has a third groove at the apex ridge arranged along the extension direction of the apex ridge, and an adhesive is applied into the third groove.

The apex ridge parts on both sides of the third groove can fully and evenly contact the display screen over the entire length of the apex ridge.

The bonding between the angular plate structure and the screen panel is achieved by the third groove. After adding adhesive into the third groove, it is connected with the screen panel, so that the connection stability can be guaranteed on the basis of ensuring linear connection.

Preferably, the apex angle of the angular plate structure is not greater than 120°; the widths of the two side walls of the angular plate structure are equal; and all angular plate structures are consistent in shape and size.

Preferably, the screen panel comprises:
A display layer; and
A substrate layer, one side of the substrate layer is connected to the display layer, and the other side of the substrate layer is connected to the supporting structure.

The substrate layer can help the display layer to be flatter after being unfolded.

Compared with the prior art, the present invention uses the apex ridges of the angular plate structure to apply a flattening force in the direction in which the apex ridges extend, thereby improving the flatness of the display screen and avoiding deformation problems such as curling and bending of the screen at the edges.

### BRIEF DESCRIPTION OF THE DRAWINGS

FIG 1 is a schematic diagram of the supporting unit in Example 1 of the present invention;
FIG 2 is a first schematic diagram of Example 1;
FIG 3 is a second schematic diagram of Example 1;
FIG 4 is a third schematic diagram of Example 1;
FIG 5 is a fourth schematic diagram of Example 1;
FIG 6 is a fifth schematic diagram of Example 1;
FIG 7 is a partial diagram of FIG 2;
FIG 8 is an enlarged view of point A in FIG 7;
FIG 9 is an enlarged view of point B in FIG 7;
FIG 10 is a schematic diagram of a sheet material in Example 1 of the present invention when it is not bent;
FIG 11 is another bending forming structure of the second groove in Example 1 of the present invention;
FIG 12 is another bending forming structure of the first groove and the third groove in Example 1 of the present invention;
FIG 13 is a schematic diagram of the display screen in Example 2 in a rolled up state;
FIG 14 is a schematic diagram of the display screen in the prior art in a rolled up state;
FIG 15 is a schematic diagram of a display screen in Example 2 of the present invention when rolled forward;
FIG 16 is a schematic diagram of the display screen in Example 2 of the present invention when rolled reversely;
FIG 17 is a schematic diagram of a supporting structure in Example 3 of the present invention;
FIG 18 is a schematic diagram of another supporting structure in Example 3 of the present invention;
FIG 19 is a schematic diagram of Example 4 of the present invention;
FIG 20 is a schematic diagram of Example 5 of the present invention;
FIG 21 is a schematic diagram of the stacking of screen panels in Example 3 of the present invention;
FIG 22 is a first schematic diagram of Example 6 of the present invention;
FIG 23 is a second schematic diagram of Example 6 of the present invention; and
FIG 24 is a third schematic diagram of Example 6 of the present invention.

List of reference numerals in the drawings: 100 - screen panel; 200 - supporting structure; 300 - lifting mechanism; 400 - scroll axle; 500 - case; 1 - supporting unit; 101 - angular plate structure; 102 - middle plate; 103 - reverse angular plate structure; 2 - reinforcing strip; 3 - first groove; 4 - second groove; 5 - third groove; 6 - display layer; 7 - substrate layer; 8 - elastic layer.

### DETAILED DESCRIPTION OF THE EMBODIMENTS

In order to enable those skilled in the art to better understand the technical solution of the present invention, the present invention is further described in detail below in conjunction with specific implementation methods.

### Example 1

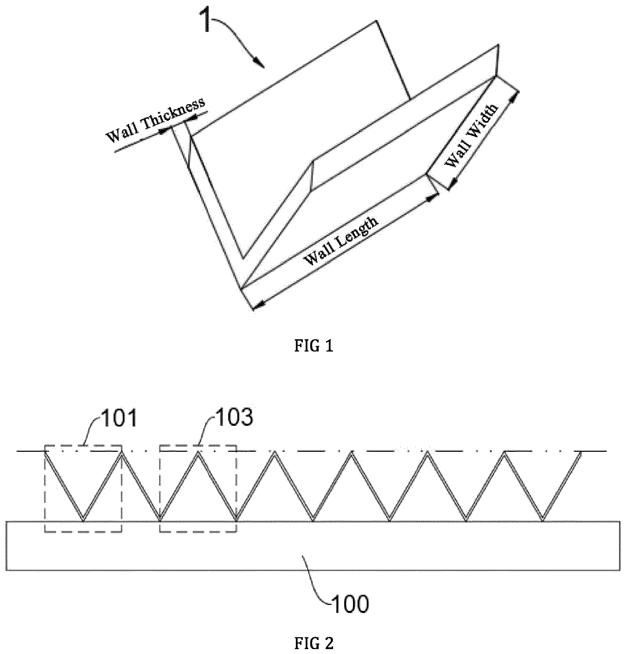

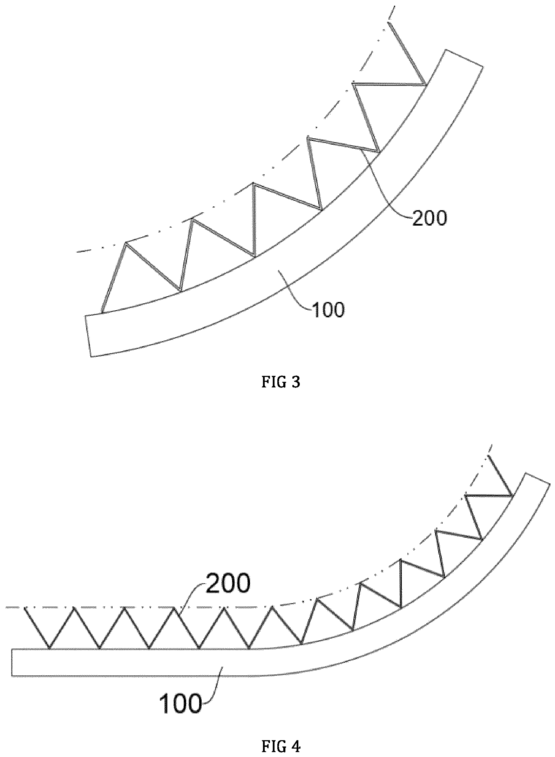

As shown in FIG 1 to FIG 6, a supporting structure 200 for display screen includes a plurality of supporting units 1 connected in sequence, wherein the supporting unit 1 includes an angular plate structure 101, and the apex ridges of the angular plate structures 101 serve as support parts and are distributed at intervals to form a supporting surface.

The angular plate structure 101 includes two side walls at an angle, and the top of the junction of the two side walls is the apex ridge. The side wall has a wall length of a certain extension length, thereby forming an apex ridge with a certain length. The apex ridge formed by this structure has excellent straightness and bending resistance. The angular plate structure 101 can be directly formed or formed by a bending process. The direct forming refers to preparing the angular plate structure 101 by injection molding, extrusion molding, etc., and the bending process refers to bending a sheet material to form the angular plate structure 101. The bending process can enhance the original sheet with a lower structural strength to be an angular plate structure 101 with higher structural strength, thereby forming an apex ridge with good straightness and high bending strength. For the display screen, as long as the apex ridge can overcome the curling and bending deformation of the display screen to maintain the flatness of the display screen, the angular plate structure 101 does not need too high structural strength. The structural strength of the structure 101 is related to the material, wall thickness, the angle between the two side walls, etc. In order to better ensure the lightweight of the structure, an angular plate structure 101 with a thinner wall thickness can be used. For example, the wall thickness of the angular plate structure 101 is less than or equal to 300µm, which can meet the needs of overcoming the curling and bending deformation of the display screen. Since the wall thickness of the angular plate structure 101 is very thin, the apex ridge can be regarded as having no width in the direction perpendicular to the length of the apex ridge. In other words, the apex ridge is a linear support portion without width. When the apex ridge of the angular plate structure 101 is attached to the display screen, the display screen and the apex ridge are actually connected in line contact. Therefore, while effectively supporting the display screen to ensure the flatness, the area on the display screen that is attached to the supporting structure 200 is extremely small, which is different from the prior art in which a surface contact connection reinforcement strip 2 is provided on the back of the display screen. While improving the flatness, it does not cause adverse effects on the display screen.

In this embodiment, a plurality of supporting units 1 are disposed continuously, that is, in any two adjacent angular plate structures 101, two side walls of the two adjacent angular plate structures 101 are connected.

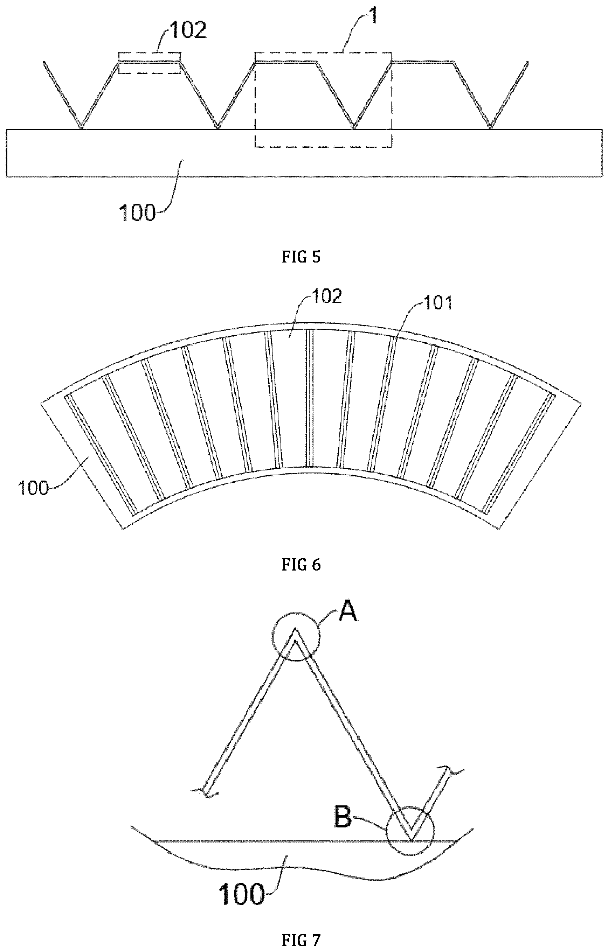

As shown in FIG 5 and FIG 6, the side wall of the previous angular plate structure 101 is connected to the side wall of the next angular plate structure 101 via the middle plate 102. In this embodiment, the middle plate 102 strengthens the structural stability of the supporting unit 1. The adjacent angular plate structures 101 are transitionally connected by the middle plate 102 between the side walls, which can improve the stability of the angular plate structure 101 relative to the display screen. Under the action of the middle plate 102, the shaking of the two side walls of the angular plate structure 101 can be effectively reduced, thereby maintaining the angle stability of the angular plate structure 101. The angle of the angular plate structure 101 has an impact on the structural stability of the angular plate structure 101, that is, the angle of the angular plate structure 101 has an impact on the bending strength of the apex ridge. Ensuring the angle stability of the angular plate structure 101 is to ensure the straightness and bending resistance of the apex ridge, thereby ensuring the flatness of the display screen in the direction of the apex ridge.

As a preferred embodiment, in any two adjacent angular plate structures 101, the two side plates close to each other constitute a reverse angular plate structure 103.

As shown in FIG 2 to FIG 4, the side wall of the first angular plate structure 101 is continuously connected to the side wall of the second angular plate structure 101 at an angle, and the connection forms a vertex, thereby forming a reverse angular plate structure 103.

It can be known that the reverse angular plate structure 103 cooperates with the angular plate structure 101 to further improve the support stability. The reverse angular plate structure 103 and the display screen are combined to form a triangular stable structure, which can better reduce the shaking of the two side walls of the angular plate structure 101, thereby maintaining the angle stability of the angular plate structure 101, and further improving the structural stability of the angular plate structure 101, and better ensuring the straightness and bending resistance of the apex ridge. By forming the reverse angular plate structure 103, a reverse apex ridge belonging to the reverse angular plate structure 103 is formed, and the reverse apex ridge can avoid the problem of low connection straightness of the side walls of the angular plate structure 101, while further improving the straightness and bending resistance, and thus further improving the flatness requirement for the display screen.

In this embodiment, the supporting surface can be a plane, a curved surface, or a supporting surface formed by a plane and a curved surface. That is, the projection surface of the display screen can be a plane, a curved surface, or a display screen forme d by a plane and a curved surface. It should be emphasized that the display screen described in this embodiment specifically refers to a screen that has only a single posture and cannot be rolled up and stored, that is, the display screen is a fixed plane screen and/or curved screen.

In this embodiment, in any two adjacent angular plate structures 101, the two side walls close to each other form the reverse angular plate structure 103. Therefore, it can be known that the angle formed at the angular plate structure 101 is equal to the angle formed at the reverse angular plate structure 103. At this time, the linear connection between the apex ridge and the display screen is further ensured by the stability characteristics of the triangle, thereby further ensuring the flatness of the display screen.

In this embodiment, the supporting structure 200 is formed by bending a sheet material forward and reversely to form continuously arranged supporting units 1.

The supporting structure 200 realizes the forming of the supporting unit 1 through a piece of sheet material, which simplifies the processing difficulty. At the same time, it can ensure the straightness of the apex ridge and the reverse apex ridge during the processing, so as to better meet the linear connection requirements between the apex ridges and the display screens, thereby better meeting the flatness requirements of the display screens.

In the prior art, a long reinforcing strip 2 with a certain cross-sectional area is usually connected to the back side of the display screen to increase the flatness of the display screen. The straightness and bending resistance of the reinforcing strip 2 itself are usually improved by increasing the cross-sectional area or selecting a material with higher strength, thereby increasing the weight of the reinforcing strip 2, which will greatly increase the overall weight of the display screen. In this embodiment, a sheet is bent to form an angular plate structure 101 of the supporting unit 1. The sheet material is thin and light, which greatly reduces the weight gain and achieves lightweight. The sheet has low requirements on the structural strength of the sheet itself. The sheet is bent to form an angular plate structure 101 with high structural strength. The apex ridges of the angular plate structure 101 have significantly enhanced straightness and bending resistance compared to the structural strength of the sheet itself. The original sheet with weak strength is enhanced through bending to form a supporting unit 1 with straightness and bending resistance that meet the requirements. The structure is simple, easy to process, low cost, and highly lightweight.

As shown in FIG 2 to FIG 4, the apex angle of the angular plate structure 101 and/or the apex angle of the reverse angular plate structure 103 can be set according to specific circumstances. In some embodiments, the reverse apex ridges of the reverse angular plate structures 103 should also be located in a surface that is parallel to the supporting surface formed by the apex ridges of the angular plate structures 101.

As shown in FIG 7, FIG 9 and FIG 10, in order to better use the present embodiment, the angular plate structure 101 is provided with a first groove 3 along the extending direction of the apex ridge on the inner side of the bending part thereof.

Furthermore, an adhesive is applied between the two side walls of the angular plate structure 101.

In one embodiment, the angular plate structure 101 is formed by bending a sheet. The sheet itself has a certain degree of structural strength and can resist deformation caused by the bending process, which is not conducive to convenient and accurate bending. Moreover, after the bending process, the stability of the angle between the two side walls of the angular plate structure 101 is difficult to effectively guarantee, so the first groove 3 is formed on the inner side of the bending part of the angular plate structure 101. The first groove 3 is used to reduce the structural strength of the sheet at the bending part, which is conducive to easier bending of the sheet. Moreover, the first groove 3 is processed on the sheet before the bending process, so that the first groove 3 also plays a role in marking the bending position, ensuring that the sheet is accurately bent according to the position of the first groove 3, improving the processing accuracy of the angular plate structure 101, that is, improving the overall dimensional accuracy of the supporting structure 200, which is conducive to ensuring the supporting uniformity and stability of the supporting structure 200 for the display screen. Furthermore, by controlling the cross-sectional shape of the first groove 3, the angle between the two side walls of the angular plate structure 101 formed by bending the sheet can be conveniently controlled, thereby ensuring that the angle accuracy of the angular plate structure 101 meets the requirements and ensuring the structural stability of the angular plate structure 101. In contrast, since the first groove 3 is formed at the bending part of the sheet, the structural strength of the angular plate structure 101 at the bending part is reduced compared to when the first groove 3 is not opened. In order to ensure the structural stability of the angular plate structure 101, after the angular plate structure 101 is formed, an adhesive is applied between the two side walls of the angular plate structure 101, and the adhesive is used to enhance the structural stability of the bending part of the angular plate structure 101. At the same time, the adhesive is also used to keep the two side walls of the angular plate structure 101 in a state of fixed angle size, thereby effectively improving the structural stability of the angular plate structure 101, ensuring the straightness and bending strength of the apex ridge of the angular plate structure 101, thereby effectively ensuring the flatness of the display screen.

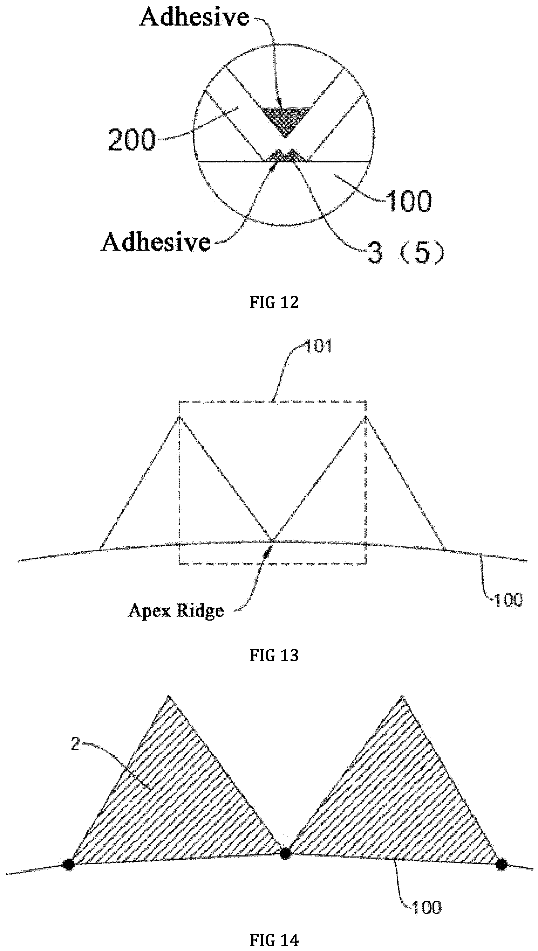

As shown in FIG 12, in some embodiments, the angular plate structure 101 is provided with a first groove 3 along the extending direction of the apex ridge on the outer side of the bending part thereof. Similarly, an adhesive is applied between the two side walls of the angular plate structure 101.

Similar to the previous embodiment, the first groove 3 in this embodiment is also provided to mark the bending position and improve the processing accuracy of the angular plate structure 101. Compared with the previous embodiment, the difference in this embodiment is that the first groove 3 is provided at a different position, that is, the first grooves 3 in the two embodiments are respectively located on two different sides of the sheet to be processed. For different embodiments, the processing differs in whether it is a forward bending or a reverse bending relative to the first groove 3. For the embodiment in which the first groove 3 is provided on the inner side of the bending part of the angular plate structure 101, it is a forward bending, and during the bending process, the first groove 3 is deformed into a concave shape. For the embodiment in which the first groove 3 is provided on the outer side of the bending part of the angular plate structure 101, it is a reverse bending, and the first groove 3 is deformed into a convex shape. The technical effects that can be achieved by the two are consistent. It is emphasized again that no matter where the first groove 3 is located, the strength of the sheet at that location is reduced accordingly. Therefore, after the first groove 3 is bent to form the angular plate structure 101, an adhesive is applied between the two side walls of the angular plate structure 101 to fix the angle between the two side walls, thereby effectively improving the structural stability of the angular plate structure 101.

As shown in FIG 7, FIG 8 and FIG 10, in a preferred embodiment, the reverse angular plate structure 103 is provided with a second groove 4 along the extending direction of the reverse apex ridge on the inner side of the bending part thereof.

Furthermore, an adhesive is applied between the two side walls of the reverse angular plate structure 103.

In one embodiment, the supporting structure 200 is formed by bending a sheet forward and reversely, so that the angular plate structure 101 and the reverse angular plate structure 103 are continuously and alternately distributed. In other words, the reverse angular plate structure 103 is also formed by bending the sheet, and a second groove 4 is formed on the inner side of the bending part of the angular plate structure 101 to utilize the second groove 4 to reduce the structural strength of the sheet at the bending part, which is conducive to more convenient bending of the sheet. The second groove 4 is processed on the sheet before the bending process, so that the second groove 4 also plays a role in marking the bending position, ensuring that the sheet is accurately bent according to the position of the second groove 4, thereby improving the processing accuracy of the reverse angular plate structure 103, that is, improving the overall dimensional accuracy of the supporting structure 200, which is conducive to ensuring the supporting uniformity and stability of the supporting structure 200 for the display screen. By controlling the cross-sectional shape of the second groove 4, the angle between the two side walls of the reverse angular plate structure 103 formed by the bending of the sheet can be conveniently controlled to ensure that the angle accuracy of the reverse angular plate structure 103 meets the requirements, ensuring the structural stability of the reverse angular plate structure 103, and then utilizing the reverse angular plate structure 103 to better reduce the shaking of the two side walls of the angular plate structure 101, thereby better improving the structural stability of the angular plate structure 101. In contrast, since the second groove 4 is formed at the bending part of the plate, the structural strength of the bending part of the reverse angular plate structure 103 is reduced compared to when the second groove 4 is not opened. In order to better ensure the structural stability of the reverse angular plate structure 103, an adhesive is applied between the two side walls of the reverse angular plate structure 103, and the adhesive is used to enhance the structural stability of the bending part of the reverse angular plate structure 103. At the same time, the adhesive is also used to keep the two side walls of the reverse angular plate structure 103 in a state of fixed angle size, thereby effectively improving the structural stability of the reverse angular plate structure 103, and then utilizing the reverse angular plate structure 103 to improve the straightness and bending strength of the apex ridge of the angular plate structure 101, thereby effectively ensuring the flatness of the display screen.

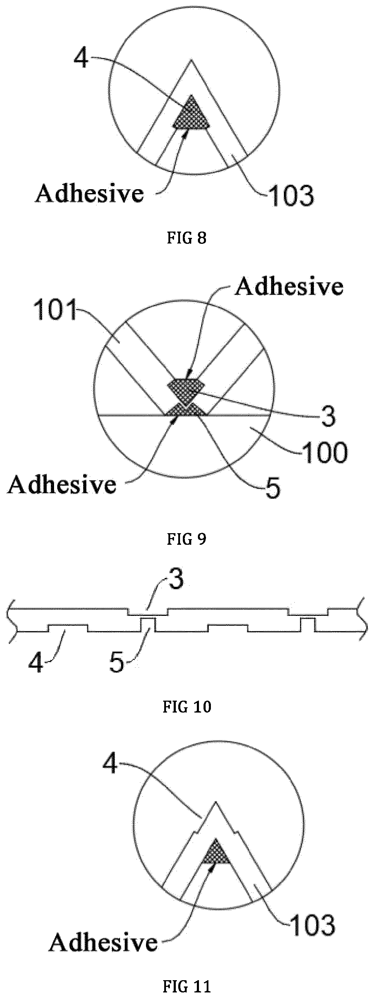

As shown in FIG 11, in some embodiments, the reverse angular plate structure 103 is provided with a second groove 4 along the extension direction of the apex ridge on the outer side of the bending part thereof. Similarly, an adhesive is applied between the two side walls of the reverse angular plate structure 103.

Similar to the previous embodiment, the second groove 4 in this embodiment is also provided to mark the bending position and improve the processing accuracy of the angular plate structure 101. Compared with the previous embodiment, the difference in this embodiment is that the second groove 4 is provided at a different position, that is, the second grooves 4 in the two embodiments are respectively located on two different sides of the sheet to be processed. For different embodiments, the processing differs in whether it is a forward bending or a reverse bending relative to the second groove 4. For the embodiment in which the second groove 4 is provided on the inner side of the bending part of the angular plate structure 101, it is a forward bending, and during the bending process, the second groove 4 is deformed into a concave shape. For the embodiment in which the second groove 4 is provided on the outer side of the bending part of the angular plate structure 101, it is a reverse bending, and the second groove 4 is deformed into a convex shape. The technical effects that can be achieved by the two are consistent. It is emphasized again that no matter where the second groove 4 is located, the strength of the sheet at that location is reduced accordingly. Therefore, after bending at the location of the second groove 4 to form a reverse angular plate structure 103, an adhesive is applied between the two side walls of the reverse angular plate structure 103 to fix the angle between the two side walls, thereby effectively improving the structural stability of the reverse angular plate structure 103.

As shown in FIG 9, in this embodiment, the apex ridge of the angular plate structure 101 is bonded to the display screen. Therefore, in some embodiments, the apex ridge of the angular plate structure 101 has a third groove 5 arranged along the extension direction of the apex ridge. Adhesive is applied into the third groove 5, thereby meeting the bonding requirements between the angular plate structure 101 and the display screen.

Adhesive bonding is used to achieve the attachment between the apex ridge of the angular plate structure 101 and the display screen. The processing is convenient and simple, and the apex ridge can be fully connected to the display screen in the entire length direction, ensuring the connection stability and the sufficient support of the apex ridge for the display screen, so that the display screen has good flatness under the support of the apex ridge. When adhesive is directly applied between the apex ridge and the display screen for connection, it is difficult to ensure that the amount of adhesive applied is uniform in the entire length direction of the apex ridge, so that it is easy to have a situation where the adhesive is thicker in some areas and thinner in some areas, which has an adverse effect on the flatness of the display screen. Therefore, a third groove 5 along the extension direction of the apex ridge is provided at the apex ridge, and adhesive is applied to the third groove 5 to bond the apex ridge to the display screen. When this method is adopted, it is easy to accurately control the amount of adhesive applied through the third groove 5, which is beneficial to ensure that the amount of adhesive applied is more uniform in the length direction of the apex ridge. When the apex ridge is connected to the display screen, the apex ridge parts on both sides of the third groove 5 can fully and evenly contact the display screen over the entire length of the apex ridge, and then the entire length of the apex ridge is bonded to the display screen through the adhesive in the third groove 5, thereby improving the uniformity of the connection between the apex ridge and the display screen over the entire length, thereby better ensuring the flatness of the display screen.

As shown in FIG 11 and FIG 12, it can be known that, in some embodiments, since the first groove 3 is provided outside the bending part of the angular plate structure 101, the third groove 5 may be provided to coincide with the first groove 3 or the third groove 5 and the first groove 3 may be the same groove. In this case, it can be understood that the first groove 3 and the third groove 5 may be the same groove. In addition to achieving the effect of bending mark, facilitating processing, and accurately controlling the angle through the interface shape, by adding adhesive in the groove, the apex ridge can be fully and evenly bonded to the screen panel 100 over the entire length. On this basis, by reasonably controlling the amount of adhesive through the volume of the groove, it can also avoid the situation that the adhesive thickness of some sections of the apex ridge is large and the adhesive thickness of some sections is small. Therefore, when the first groove 3 and the third groove 5 coincide, or both are the same groove, it will not affect the bending effect of the sheet, nor will it affect the connection effect between the apex ridge and the screen panel 100.

As shown in FIG 10, the sheet material used to form the supporting structure 200 is first grooved before being bent. The first groove 3, the second groove 4 and the third groove 5 are long grooves parallel to each other. The first groove 3 and the second groove 4 are alternately distributed along the surface direction of the sheet material, and the first groove 3 and the second groove 4 are located on different surfaces of the sheet material, respectively. The third groove 5 and the second groove 4 are located on the same surface of the sheet material, and the third groove 5 is opposite to the first groove 3. After the grooving is completed, the sheet material is bent along the path of the first groove 3, the second groove 4 and the third groove 5 to form the angular plate structure 101 and the reverse angular plate structure 103, and then the supporting structure 200 is connected to the display screen. In the specific connection process, the continuously bent supporting structure 200 can be directly bonded to the back of the display screen.

Therefore, the supporting structure 200 used in this embodiment can be processed and bent by relatively thin metal materials. During the forming process, firstly, grooves are cut on the sheet to meet the bending requirements, and then the grooves are used as positioning, and finally the bending process is performed according to the technical requirements.

It should be noted that since the first groove 3, the second groove 4, and the third groove 5 are formed at the corresponding positions before the bending process, during the bending process, the first groove 3, the second groove 4, and the third groove 5 provide the required markings for the bending process, so that during the bending process of the supporting structure 200, a beneficial overall dimensional accuracy is guaranteed, and during the supporting process of the supporting structure 200, the supporting uniformity and stability of the display screen are guaranteed. It can be known that by controlling the cross-sectional shape of the first groove 3, the second groove 4, and the third groove 5, the angle control of the angular plate structure 101 and the reverse angular plate structure 103 is also achieved, thereby ensuring that the angular plate structure 101 and the reverse angular plate structure 103 have a precise design angle, which is more conducive to avoiding the shaking of the two side walls of the angular plate structure 101, thereby better improving the structural stability of the supporting structure 200.

It can be understood that the structural strength at the first groove 3 and the second groove 4 is lower than the structural strength at positions without the first groove 3 and the second groove 4. In order to better ensure the structural stability of the first groove 3 and the second groove 4, an adhesive is applied to the first groove 3 and the second groove 4, thereby enhancing the structural stability of the angular plate structure 101 and the reverse angular plate structure 103. The adhesive is also used to maintain the angle between the angular plate structure 101 and the reverse angular plate structure 103 at the processing angle, thereby better improving the structural stability of the angular plate structure 101 and the reverse angular plate structure 103, and then using the angular plate structure 101 and the direction angular plate structure 101 to improve the straightness and bending strength of the apex ridge and the reverse apex ridge, thereby effectively ensuring the flatness of the display screen.

Therefore, after processing and forming, adhesive is applied to the first groove 3 and the second groove 4, so that the apex ridge and the reverse apex ridge maintain their processing angles. Before the angular plate structure 101 is attached to the back of the display screen, adhesive is applied to the third groove 5. By controlling the cross-sectional shape of the third groove 5, the amount of adhesive applied can be accurately controlled so that the amount of adhesive filled between each apex ridge is consistent, thereby ensuring the uniformity of the connection between the supporting structure 200 and the display screen. The adhesive in the third groove 5 is then used to attach the angular plate structure 101 to the display screen, which not only facilitates the attachment and connection between the apex ridge and the display screen, but also facilitates the full connection of all the apex ridges to the display screen in the entire length direction, thereby ensuring the connection stability and the adequacy of the support for the display screen, so that the display screen has better flatness under the support of the apex ridge.

Therefore, it can be seen from FIG 10 that after the first groove 3, the second groove 4 and the third groove 5 are formed, the first groove 3, the second groove 4 and the third groove 5 form easy-to-bend portions and bending marks to finally form the supporting structure 200.

In order to better use this embodiment, the wall thickness of the angular plate structure 101 is 50 to 300µm; the apex angle of the angular plate structure 101 is not greater than 120°, and the wall widths of the two side walls of the angular plate structure 101 are equal.

The sheet material after the bending process has multiple angular structures, among which the apex ridges of the angular plate structure 101 can ensure that in the process of supporting the display screen, the display screen is provided with better support uniformity and stability, thereby ensuring the corresponding straightness and bending strength, thereby ensuring that the display screen has a good flatness. If the above-mentioned angle is too large, it is easier to cause flattening in the bending deformation direction of the angular plate structure 101 and the reverse angular plate structure 103, that is, when the supporting structure 200 is subjected to external force, it is easier to cause the two side walls of the angular plate structure 101 to move away from each other, which is more likely to cause curling, bending, etc. on the display screen, and even damage the display screen. Therefore, the apex angle of the angular plate structure 101 should not exceed 120°, and it can also be known that the apex angle of the reverse angular plate structure 103 should not exceed 120°.

In some embodiments, if the angle is too small, it is easier to cause further squeezing and folding in the bending deformation direction of the angular plate structure 101 and the reverse angular plate structure 103, that is, when the supporting structure 200 is subjected to external force, it is easier to cause the two side walls of the angular plate structure 101 to approach each other, which is more likely to cause the display screen to curl or bend, and even damage the display screen. Therefore, generally speaking, the best range of the apex angle of the angular plate structure 101 is 30° to 120°.

On this basis, if the widths of the two side walls of the angular plate structure 101 are equal, the support effect is better, and the flattening effect brought by the line contact and connection can be ensured. Since the widths of the two side walls of the angular plate structure 101 are equal, the side walls of all angular plate structures 101 are equal. At this time, before the bending process, the two faces of the sheet are parallel to each other, which is more conducive to reducing the difficulty of processing and more conducive to obtaining the required design accuracy through the bending process. At the same time, since the side walls of all angular plate structures 101 are equal, when all the apex ridges are connected to the display screen, the connection uniformity between the supporting structure 200 and the display screen can be better guaranteed, thereby ensuring the connection consistency between the display screen and each apex ridge, thereby providing a more favorable supporting stability for the display screen to better meet the flatness requirements of the display screen.

In this embodiment, the thickness of the two side walls of the angular plate structure 101 is 50 to 300µm, which means that the thickness of the sheet material constituting the supporting structure 200 is 50 to 300µm. The straightness and bending resistance of the apex ridges of the angular plate structure 101 formed by bending the sheet material of this thickness can ensure the flatness requirement of the display screen, and it has a high degree of lightweight, which can reduce the overall weight of the display screen.

Therefore, the supporting structure 200 provided in this embodiment is connected to the display screen, so that the strength perpendicular to the bending position can be enhanced at the apex ridge of the angular plate structure 101, and the deformation of the display screen in this direction can be resisted, so that the deformation of the apex ridge within any 20cm in its extension direction does not exceed 0.5mm, and the deformation of the entire length does not exceed 1mm, thereby better avoiding deformation problems such as curling and bending of the display screen, thereby better improving the external aesthetics and projection image quality.

It should be noted that the length of the angular plate structure 101 in the extending direction of its apex ridge should not be less than 90% of the width of the display screen. When the apex ridge of the angular plate structure 101 is equal to the width of the display screen, the flattening effect is best.

### Example 2

The difference between this embodiment and embodiment 1 is that the apex ridges of all the angular plate structures 101 are parallel to each other to form a rollable supporting surface.

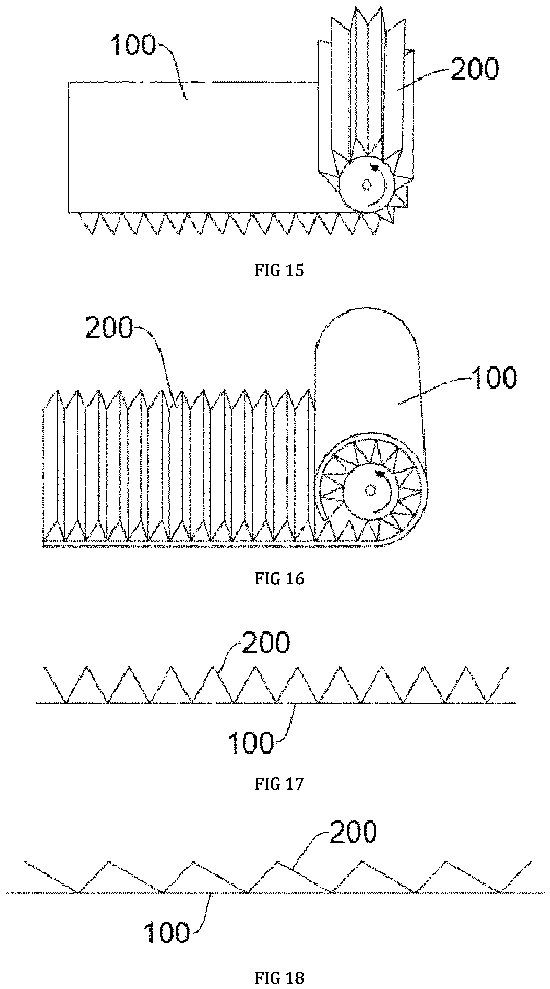

As shown in FIG 15 and FIG 16, some display screens are rollable screens. It should be noted that the extension direction of the apex ridge of any angular plate structure 101 is consistent with the roll axis direction of the display screen, that is, on the basis of the apex ridges being parallel to each other, they are also parallel to the axis of the scroll axle 400. In other words, the display screen as a whole is a rollable and retractable screen, so that it can be retracted into a roll-up cylinder by reeling, which greatly reduces the occupied space, facilitates storage and transportation, can be stored and hidden when not in use, improves aesthetics, and greatly improves transportation convenience, which is especially conducive to the promotion and application of large-size screens, solves the problem of affecting the application scenario range of large-size screens due to the limitation of transportation space such as elevators and corridors, and greatly improves the flatness of large-size screens, thereby improving the display effect and the viewing experience. Since the display screen needs to be rolled up and stored, the length direction of the apex ridges needs to be consistent with the roll axis, and when the display screen is rolled up, the apex ridges will not be bent, and the apex ridges will not affect the rolling of the display screen. In the rolling and unfolding direction of the display screen (perpendicular to the length direction of the apex ridges), the display screen is not subjected to additional supporting forces, and the display screen can be rolled up and stored as a whole by overcoming the deformation force of the display screen itself. When the display screen is in the rolled up and stored state, the apex ridges of all the angular plate structures 101 are still in a state of being parallel to each other. The apex ridges are not bent in this state, and maintain their inherent good straightness and anti-bending strength. Therefore, when the display screen is unfolded again, the apex ridges can still ensure the flatness of the display screen in its length direction, thereby ensuring the display effect. It can be seen that in some embodiments, the display screen can be set to be rolled forward, and in other embodiments, the display screen can be set to be rolled reversely.

As shown in FIG 13, since the apex ridges are parallel to each other and to the axis of the scroll axle 400, the display screen is contacted and supported linearly along the axial direction of the scroll axle 400 by the apex ridges spaced in the rolling and unfolding direction of the display screen. From the cross section of the winding, it can be seen that the connection between the display screen and the apex ridge is only a support point without length in the rolling and unfolding direction. The support point will not increase the bending strength of the display screen at the support point along the rolling and unfolding direction. The apex ridges of the angular plate structure 101 have the effect of increasing the straightness and bending strength of the display screen in the axial direction of the scroll axle 400, and have no effect of increasing the bending strength of the display screen in the direction perpendicular to the axial direction of the scroll axle 400 (the rolling and unfolding direction). The section of the display screen between adjacent supporting points is not in contact with the supporting structure 200 and is in a free state, so that the bending strength of the section of the display screen between adjacent supporting points along the rolling and unfolding direction is not strengthened, so that the display screen as a whole maintains its own, uniform and consistent bending strength in the rolling and unfolding direction, so that when the display screen is rolled up, the display screen as a whole can be bent and deformed evenly and smoothly, and the section of the display screen between adjacent supporting points can be bent and deformed freely and smoothly, thereby effectively avoiding creases while realizing the rollable function. As can be seen from FIG 14, in the prior art, in order to realize the rollability of the display screen and ensure the flatness of the display screen in the axial direction of the scroll axle 400, parallel and spaced reinforcing strips 2 are usually set on the back of the display screen, and the length direction of the reinforcing strips 2 is along the axial direction of the scroll axle 400. Adjacent reinforcing strips 2 can be hingedly connected. The reinforcing strips 2 in the prior art usually adopt a long strip structure with a certain cross-sectional area. The larger the cross-sectional area, the higher the structural strength of the reinforcing strip 2, so as to ensure that the reinforcing strip 2 has good straightness and bending resistance in its length direction. For example, the cross section of the reinforcing strip 2 is a trapezoid or rectangle with a certain area. The reinforcing strip 2 is attached to the display screen to ensure the connection stability and achieve the flatness of the display screen in the axial direction of the scroll axle 400. Therefore, the reinforcing strip 2 in the prior art is a surface contact structure with the display screen. It can be seen from the cross section of the scroll that the display screen is directly attached to the reinforcing strip 2 for a length in the rolling and unfolding direction, so that the bending strength of the section where the display screen is bonded to the reinforcing strip 2 in the rolling and unfolding direction is greatly enhanced, while the bending strength of the section where the display screen is not bonded to the reinforcing strip 2 is not enhanced. As shown in FIG14, when the display screen is rolled, the section where the display screen is bonded to the reinforcing strip 2 will not bend and will remain straight, while the section of the display screen that is not bonded to the reinforcing strip 2 will bend to achieve the rolling and bending of the entire display screen. In other words, the bending and deformation of the display screen is concentrated in the section where the display screen is not bonded to the reinforcing strip 2, where the bending strength is the weakest. Therefore, the bending deformation at this location is large and creases are likely to occur, which seriously affects the display effect and service life of the display screen. It should be noted that, whether in the other embodiment or the present embodiment, when the apex angles and side wall widths of all the angular plate structures 101 are equal, the support effect of the supporting structure 200 is the best, and the consistency of the change in the shape of the overall structure can be better ensured. That is to say, when the shapes and sizes of all the angular plate structures 101 are consistent, the changes of the multiple angular plate structures 101 can be consistent.

In this embodiment, when the display screen is in the unfolded state, if the ends of the two side walls of the angular plate structure 101 away from the apex ridge are connected, the longitudinal section of the formed structure is an isosceles triangle, and thus the reverse angular plate structure 103 is also an isosceles triangle. As a result, when the display screen is rolled up, the change trends of the multiple angular plate structures 101 are consistent, so that the multiple apex ridges remain parallel, avoiding the protrusion of local reverse apex ridges( which causes the local part of the display screen to be damaged by concentrated pressure in the rolled-up state), so that the front surface of the display screen can be evenly in contact with the reverse apex ridges of the reverse angular plate structure 103 in the rolled-up state, so that the supporting force of the reverse apex ridges of the reverse angular plate structure 103 on the front surface of the display screen is uniform in the rolling and unfolding direction of the display screen, thereby effectively ensuring the integrity of the display screen. At the same time, when the display screen is in the unfolded state, it can also provide a suitable and uniform force to the display screen, ensuring that the display screen in this state maintains the required flatness. In particular, when the apex angle of the angular plate structure 101 is 60°, the isosceles triangle formed above is actually an equilateral triangle. At this time, if the display screen is rolled, the consistency of the change of the shape of the overall structure can be better ensured.

It can be known that in some embodiments, when the display screen is in the unfolded state, if the ends of the two side walls of the angular plate structure 101 away from the apex ridge are connected, the longitudinal section of the formed structure is a non-isosceles triangle. Since all the angular plate structures 101 have the same shape and size, when the display screen is rolled up, the multiple angular plate structures 101 all have the consistency in the change of structural shape.

As shown in FIG 17 and FIG 18, it should be noted that, no matter what the apex angle of the angular plate structure 101 and/or the apex angle of the reverse angular plate structure 103 is, during the processing, the reverse apex ridges of all the reverse angular plate structures 103 should also be located on the same plane, so as to ensure that the display screen can be evenly rolled. The reverse apex ridges of the reverse angular plate structure 103 constitute a smoothly transitioned supporting surface to avoid the local reverse apex ridges of the supporting structure 200 protruding, which would cause the display screen to be damaged locally by concentrated pressure in the rolled-up state. The front surface of the display screen can be evenly in contact with the reverse apex ridges of the reverse angular plate structure 103 in the rolled-up state, so that the supporting force of the reverse apex ridges of the reverse angular plate structure 103 in the rolled-up state on the front surface of the display screen is uniform in the rolling and unfolding direction of the display screen, thereby effectively ensuring the integrity of the display screen.

More preferably, the angular plate structures 101 of all supporting units 1 are consistent in shape and size, that is, the angles and side wall widths of all angular plate structures 101 are consistent, so that in the rolling and unfolding direction of the display screen, the display screen is supported by evenly spaced apex ridges, thereby improving the uniformity of support for the display screen, which is beneficial to ensuring that the flatness of the display screen along the rolling axis at any position in its rolling and unfolding direction is consistent, and that the bending strength of the display screen in its rolling and unfolding direction is uniform, which is beneficial to uniform rolling and storage of the display screen, avoiding creases generated by excessive local bending of the display screen, ensuring the integrity of the display screen and extending its service life. When all angular plate structures 101 have the same shape and size, it is also beneficial to the preparation and processing of the supporting structure 200, reducing the difficulty of implementation and improving production efficiency.

It should be noted that, since the rolling of the display screen needs a smaller diameter, the diameter of the scroll axle 400 is generally not greater than 6cm.

It can be seen from this embodiment that, since the display screen can be rolled up, and the extension direction of the apex ridge of the angular plate structure 101 of any supporting unit 1 is consistent with the axial direction of the scroll axle 400, it is easier to roll up the display screen, and at this time, packaging, transportation, temporary storage, and home delivery are more convenient. In addition, after the display screen is rolled up and unfolded, the anti-bending performance of the supporting unit 1 can be used to resist deformation problems such as curling and bending caused by the display screen itself, thereby ensuring that the displayed image will not be deformed and improving the image quality.

### Example 3

As shown in FIG 1 to FIG 6, a display screen includes a screen 100 and a supporting structure 200; the supporting structure 200 includes a plurality of supporting units 1; the supporting unit 1 includes an angular plate structure 101, and the apex ridge of the angular plate structure 101 is attached to the back of the screen 100.

Therefore, when the apex ridge of the angular plate structure 101 is attached to the screen panel 100, the screen panel 100 and the apex ridge are actually connected in line contact, so that the screen panel 100 is effectively supported to ensure the flatness, and the area on the screen panel 100 that is attached to the supporting structure 200 is extremely small. This is different from the prior art in which the surface contact connection reinforcement strip 2 is provided on the back of the screen panel 100, and the flatness is improved without causing adverse effects on the screen panel 100.

It should be emphasized that the purpose of achieving line contact and connection through the angular plate structure 101 is to meet the straightness requirement. In other words, it should be understood that the key to improving the flatness of the screen panel 100 lies in the apex ridge of the angular plate structure 101.

In this embodiment, the screen panel 100 is flexible and rollable, and the apex ridges of all the angular plate structures 101 are parallel to each other, and the apex ridges are consistent with the rolling axis direction of the screen panel 100. Since the screen panel 100 is flexible and rollable, it can be known that the screen panel 100 is connected to the scroll axle 400, and therefore it is necessary to ensure that the apex ridges are consistent with the axis direction of the scroll axle 400, that is, on the basis of the apex ridges being parallel to each other, they are also parallel to the axis of the scroll axle 400. Multiple angular plate structures 101 can be arranged continuously, that is, in any two adjacent angular plate structures 101, the two side walls of the two adjacent angular plate structures 101 are connected.

As shown in FIG 5, the side wall of the previous angular plate structure 101 is connected to the side wall of the next angular plate structure 101 via the middle plate 102.

As a preferred embodiment shown in FIG 2, in any two adjacent angular plate structures 101, two side walls close to each other are directly connected to form a reverse angular plate structure 103.

As shown in FIG 2, the side wall of the previous angular plate structure 101 is continuously connected to the side wall of the next angular plate structure 101 at an angle, and the connection forms a vertex, thereby forming a reverse angular plate structure 103.

In this embodiment, the supporting structure 200 is formed by bending a sheet material forward and reversely to form continuously arranged supporting units 1.

As shown in FIG 7, FIG 9 and FIG 10, in this embodiment, the angular plate structure 101 is provided with a first groove 3 along the extending direction of the apex ridge on the inner side of the bending part thereof.

Furthermore, an adhesive is applied between the two side walls of the angular plate structure 101.

As shown in FIG 12, in some embodiments, the angular plate structure 101 is provided with a first groove 3 along the extending direction of the apex ridge on the outer side of the bending part thereof. Similarly, an adhesive is applied between the two side walls of the angular plate structure 101.

As shown in FIG 7, FIG 8 and FIG 10, in a preferred embodiment, the reverse angular plate structure 103 is provided with a second groove 4 along the extending direction of the reverse apex ridge on the inner side of the bending part thereof.

Furthermore, an adhesive is applied between the two side walls of the reverse angular plate structure 103.

As shown in FIG 11, in some embodiments, the reverse angular plate structure 103 is provided with a second groove 4 along the extension direction of the apex ridge on the outer side of the bending part thereof. Similarly, an adhesive is applied between the two side walls of the reverse angular plate structure 103.

In order to better use this embodiment, the apex ridge of the angular plate structure 101 is bonded to the screen panel 100.

Furthermore, as shown in FIG 7 and FIG 9, the angular plate structure 101 has a third groove 5 at the apex ridge, which is arranged along the extension direction of the apex ridge, and an adhesive is applied into the third groove 5.

In order to better use this embodiment, the apex angle of the angular plate structure 101 is not greater than 120°.

In this embodiment, in any two adjacent angular plate structures 101, the two side walls close to each other form the reverse angular plate structure 103. Therefore, it can be known that the angle formed at the angular plate structure 101 is equal to the angle formed at the reverse angular plate structure 103. At this time, the linear connection between the apex ridge and the screen panel 100 is further ensured by the stability characteristics of the triangle, thereby further ensuring the flatness of the screen panel 100.

In this embodiment, the apex angle of the angular plate structure 101 is 60°, and the reverse apex angle of the reverse angular plate structure 103 is also 60°; it can be known that in different embodiments, the apex angle of the angular plate structure 101 and the reverse apex angle of the reverse angular plate structure 103 can also be 30°, 45°, 90°, 120°, etc.

In this embodiment, the widths of the two side walls of the angular plate structure 101 are equal, and the shapes and sizes of all angular plate structures 101 are consistent. Therefore, for the flexible and rollable curtain sheet 100, it is advantageous to evenly roll and store it, and avoid excessive local bending to form creases.

This achieves a better supporting effect and can better ensure the flattening effect brought about by the line contact and connection.

In order to better use this embodiment, the screen panel 100 includes a display layer 6 and a substrate layer; one side of the substrate layer is connected to the display layer 6, and the other side of the substrate layer is connected to the supporting structure 200.

In this embodiment, the display layer 6 is used for imaging display, and according to actual needs, one of white plastic screen, metal screen, Fresnel optical screen, and line grating screen can be selected. It should be known that the substrate layer is usually made of a rollable material.

In this embodiment, the supporting structure 200 is made of one or more materials selected from PET, BOPET, PE, and PC. In this embodiment, the supp orting structure 200 can be formed by forming the above materials into plates by vacuum forming or extrusion, and then grooving and bending. Alternatively, the supporting structure 200 having the required grooves and being bent can be directly obtained by extruding the above materials.

In addition, the supporting structure 200 may also be an organic-inorganic hybrid sheet containing inorganic materials, such as a sheet with added inorganic particles (silicon dioxide, titanium dioxide, etc.) or added inorganic fibers (such as glass fibers, etc.).

The manufacturing material of the display layer 6 includes one or more of TPU, PU, elastic PVC, PE, silicone rubber, synthetic rubber, and natural rubber. On the basis of ensuring the image quality of the display layer 6, the display layer 6 has elasticity to meet the rolling requirements.

In this embodiment, the substrate layer is made of one or more materials selected from PET, PC, and PC/PMMA alloy. The substrate layer has a higher hardness than the display layer 6, so that the display layer 6 can be unfolded more smoothly.

The selection of the above materials is based on their own material properties and cost considerations. On the basis of satisfying the linear connection stability, deformation problems such as curling and bending at the edge of the screen panel 100 are avoided.

Therefore, when using this embodiment, the supporting structure 200 can be directly adhered to the back of the display layer 6, or the substrate layer can be first adhered to the back of the display layer 6, and then the supporting structure 200 can be adhered to the side of the substrate layer away from the display layer 6.

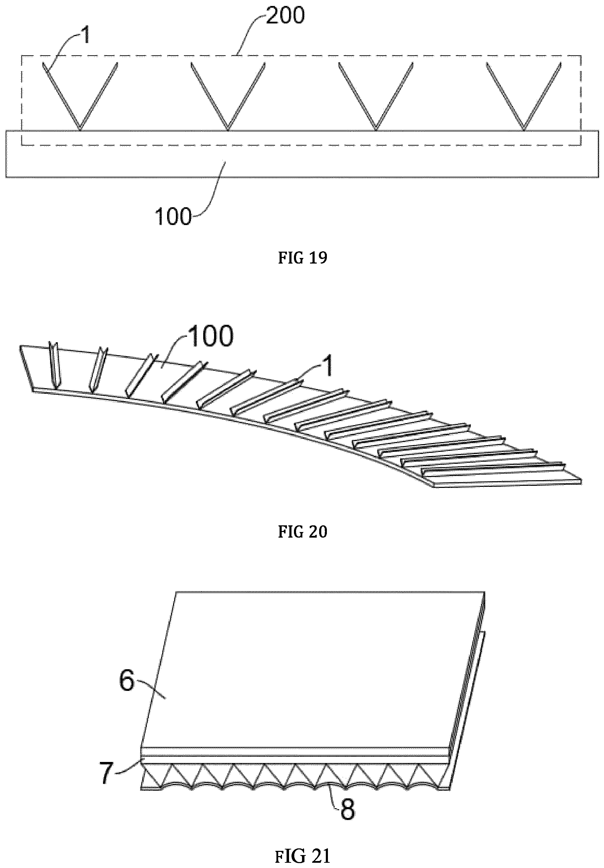

As shown in FIG 15 and FIG 16, in this embodiment, the rolling of the screen panel 100 can be forward rolling or reverse rolling. Therefore, in some embodiments, as shown in FIG 21, the reverse apex ridges of all reverse angular plate structures 103 are connected by an elastic layer to avoid scratching the display layer 6.

### Example 4

Different from the third embodiment, in the fourth embodiment, a plurality of angular plate structures 101 can be separately arranged.

As shown in FIG 19, all the angular plate structures 101 are attached to the screen panel 100 in a side-by-side and spaced manner. It should be emphasized that the angular plate structures 101 are attached to the screen panel 100 via their apex ridges to meet the requirement of line contact and connection.

In this embodiment, the angular plate structure 101 is formed by bending a sheet material.

It should also be emphasized that, in this embodiment, the angular plate structure 101 is also connected to the screen panel 100 via its apex ridge, so that the apex ridge of the angular plate structure 101 can provide the screen panel 100 with a suitable flattening force in its extension direction.

In this embodiment, similar to the example 3, the length of the angular plate structure 101 in the direction of extension of its apex ridge should be not less than 90% of the width of the screen panel 100. When the apex ridge of the angular plate structure 101 is equal to the width of the screen panel 100, the flattening effect is best.

### Example 5

The present invention further provides an example 5, wherein the directions of the apex ridges of the angular plate structure 101 include several non-parallel directions.

The difference from the above embodiment is that the arrangement of the multiple supporting units 1 is different. This embodiment is suitable for special-shaped screens, such as the fan-shaped screen shown in FIG 20. When the multiple supporting units 1 are arranged in a fan shape, the flattening effect of the screen panel 100 of this shape can be well achieved. Of course, it is known that this embodiment is also suitable for display screens of regular shapes.

It should be noted that, in this embodiment, any two adjacent supporting units 1 may be connected or spaced apart.

Therefore, it can be known that the supporting structure 200 is applicable to a non-rollable screen, and the non-rollable screen can be a flat screen, a curved screen, or a screen that is a combination of a flat screen and a curved screen.

### Example 6

Based on Example 3, this embodiment can realize the unfolding of the screen through a driving mechanism.

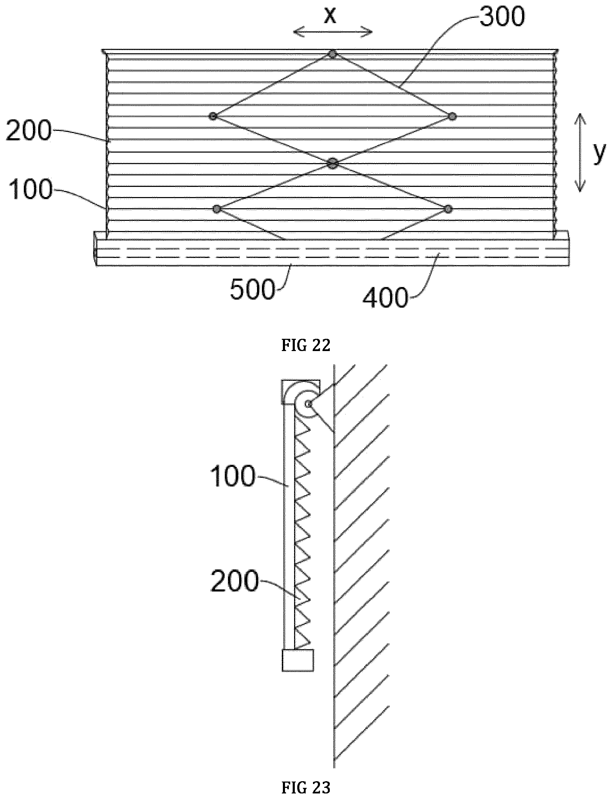

As shown in FIG 22, in some embodiments, the rollable projection screen includes a rollable screen panel 100 and a plurality of supporting structures 200 disposed on the opposite side of the imaging display side of the screen panel 100, and further includes a scroll axle 400 and a lifting mechanism 300; the scroll axle 400 is disposed in the linear direction x of the scroll axle 400 and is located at the edge of the screen panel 100; the lifting structure is disposed on the side of the screen panel 100 close to the supporting structure 200. The scroll axle 400 is used to fold and unfold the rollable projection screen and provide unfolding resistance; the lifting mechanism 300 is used to support and unfold the rollable projection screen.

When it is not needed to be viewed, the rollable projection screen is retracted into the case 500 through the scroll axle 400. When it is needed to be viewed, the rollable projection screen is lifted from the case 500 by the support force of the lifting mechanism 300 to achieve the purpose of viewing. In addition, the projector can also be built into the case 500 to prevent the projector from being moved and affecting viewing. As can be seen from the figure, the lifting mechanism 300 mainly provides the rollable projection screen with supporting force in the y direction perpendicular to axis of the scroll axle 400, but the supporting force of the lifting mechanism 300 in the x direction of the axis of the scroll axle 400 is very small. Combined with the supporting structure 200, it can effectively solve the problem of uneven lifting screen in the prior art. At the same time, the lifting screen can also not use the case 500, and the scroll axle 400 is wrapped in a box, which is convenient for storing and moving the screen, so that the rollable projection screen can be placed in various venues for use, which greatly expands the application scenarios of the rollable projection screen. Similarly, the rollable projection screen of the present application can also be applied to scenarios such as floor-pull screens, electric screens, and bracket screens, and can effectively solve the problem of unevenness in these application scenarios of rollable projection screens.

For example, as shown in FIG 23, in one embodiment, the display screen is used in a projection system, and the projection system further includes a driving mechanism and a counterweight rod; the driving mechanism is used to drive the screen panel 100 to unfold downward or retract upward in a direction perpendicular to the horizontal plane; the counterweight rod is arranged at the bottom of the screen panel 100. In this embodiment, in the state where the screen panel 100 is unfolded, the driving mechanism has a scroll axle 400, and the scroll axle 400 is connected to the upper end of the screen panel 100. When the scroll axle 400 rotates in the forward direction, the screen 100 is reeled. In this embodiment, the counterweight rod can give the screen panel 100 a force in the vertical direction, and straighten the screen panel 100 in the direction perpendicular to the rolling axis. In other words, in the direction perpendicular to the rolling axis, the flatness of the screen panel 100 is maintained by an external traction force (including gravity, the force of the telescopic mechanism, etc.), and in the direction of the rolling axis, the flatness of the screen 100 is guaranteed by the supporting structure 200, thereby improving the flatness of the screen 100 as a whole.

For example, in another embodiment, the display screen is used in a projection system, and the projection system further includes a first column and a second column, and the first column and the second column are arranged in parallel. In this embodiment, the screen panel 100 can reciprocate between the first column and the second column. It can be understood that in this embodiment, the first column and the second column both have a scroll axle 400 for connecting the screen panel 100, and the scroll axle 400 has a motor for driving the rotation thereof, so that on the basis of satisfying the adjustment of the screen panel 100, the two motors can assist in flattening the screen 100.

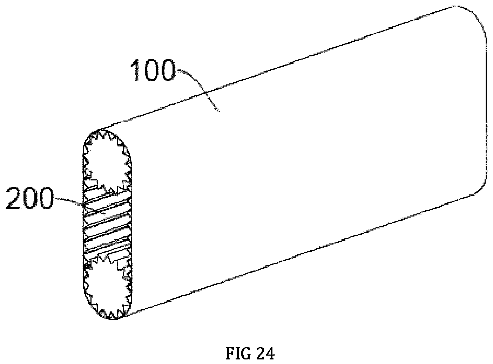

As also shown in FIG 24, similarly, in one embodiment, the screen panel 100 is configured as a structure connected end to end, and in this case, a cyclic adjustment of the screen panel 100 can be achieved.

For further explanation, the lifting mechanism 300 in this embodiment can be a curved arm type, a column type, or a scissor type. Of course, there are other types of lifting mechanisms that can be applied to the rollable projection screen of the present application, which will not be listed here. The control method of the lifting mechanism 300 can be manual control or electric control.

In the above embodiment, the projection system is equipped with a projector, which can be a long-throw projector, a short-throw projector, or an ultra-short-throw projector. The light source used can be a laser light source or an LED light source, wherein the laser light source can be a monochromatic laser, a two-color laser, or a three-color laser.

In summary, the embodiments of the present application can adopt ordinary projection screens such as white plastic screens, metal screens, glass bead screens, etc., or optical screens such as Fresnel optical screens, line grating screens, photon screens, etc. Whether it is an ordinary projection screen or an optical screen, it can be used to image the image light T emitted by the projector, and regardless of whether these projection screens are a single functional structure layer (such as the diffuse reflection functional layer of the white plastic screen, the metal directional reflection layer of the metal screen, etc.), or multiple functional structure layers (such as the diffusion layer, color layer, Fresnel lens layer, and reflection layer of the Fresnel optical screen, the reflection layer, light absorption layer, and grating structure layer of the line grating screen, etc.), wherein these projection screens will also have arching and warping problems after being rolled up and unfolded. Therefore, the solutions of the embodiments of the present application can be applied to solve the arching and warping problems and meet the viewing needs of the projected image. Therefore, they all belong to the protection scope of the rollable projection screen of the solution of the present application.

The above are only preferred embodiments of the present invention. It should be noted that the above preferred embodiments should not be regarded as limiting the present invention, and the protection scope of the present invention should be based on the scope defined by the claims. For ordinary technicians in the art, improvements and modifications can be made without departing from the spirit and scope of the present invention, and these improvements and modifications should also be regarded as falling into the scope of the present invention.

## Claims

1. A supporting structure for display screen, comprising:
a plurality of supporting units connected in sequence, wherein the supporting unit includes an angular plate structure, and apex ridges of the angular plate structures serve as supporting parts and are distributed at intervals to form a supporting surface.

2. The supporting structure for display screen according to claim 1, wherein the supporting surface comprises a planar surface and a curved surface or a combination thereof.

3. The supporting structure for display screen according to claim 1, wherein in any two adjacent angular plate structures, two side plates close to each other constitute an inverse angular plate structure.

4. The supporting structure for display screen according to claim 1, wherein the apex ridges of all the angular plate structures are parallel to each other to form a rollable supporting surface.

5. The supporting structure for display screen according to claim 1, wherein the supporting structure is formed by bending a sheet material forward and reversely to form continuously arranged supporting units.

6. The supporting structure for display screen according to claim 5, wherein the angular plate structure has a first groove along an extension direction of the apex ridge on an inner side or an outer side of a bending part thereof.

7. The supporting structure for display screen according to claim 5, wherein an adhesive is applied between two side walls of the angular plate structure.

8. The supporting structure for display screen according to claim 3, wherein the reverse angular plate structure is provided with a second groove along an extension direction of the apex ridge on an inner side or an outer side of a bending part thereof.

9. The supporting structure for display screen according to claim 3, wherein an adhesive is applied between two side walls of the reverse angular plate structure.

10. The supporting structure for display screen according to claim 1, wherein the angular plate structure has a third groove at the apex ridge arranged along the extension direction of the apex ridge.

11. The supporting structure for display screen according to claim 1, wherein the apex angle of the angular plate structure is not greater than 120°, the widths of two side walls of the angular plate structure are equal; and all angular plate structures are consistent in shape and size.

12. A display screen, comprising:
a screen panel and a supporting structures;
wherein the supporting structure comprises a plurality of supporting units; and
the supporting unit comprises an angular plate structure, and an apex ridge of the angular plate structure is attached to the back side of the screen panel.

13. The display screen according to claim 12, wherein the directions of the apex ridges of the angular plate structures include a plurality of non-parallel directions; or
the screen panel is flexible and rollable, and the apex ridges of all the angular plate structures are parallel to each other, and the apex ridges are consistent with the rolling axis of the screen panel.

14. The display screen according to claim 12, wherein in any two adjacent angular plate structures, two side walls close to each other are connected.

15. The display screen according to claim 14, wherein in any two adjacent angular plate structures, the two side walls close to each other form an inverse angular plate structure.

16. The display screen according to claim 15, wherein the supporting structure is formed by bending a sheet material forward and reversely to form continuously arranged supporting units.

17. The display screen according to claim 12, wherein the angular plate structure is formed by bending a sheet material.

18. The display screen according to claim 16 or 17, wherein the angular plate structure is provided with a first groove along an extension direction of the apex ridge on an inner side or an outer side of a bending part thereof.

19. The display screen according to claim 16 or 17, wherein an adhesive is applied between two side walls of the angular plate structure.

20. The display screen according to claim 15, wherein the reverse angular plate structure is provided with a second groove along an extension direction of the reverse apex ridge on an inner side or an outer side of a bending part thereof.

21. The display screen according to claim 15, wherein an adhesive is applied between the two side walls of the reverse angular plate structure.

22. The display screen according to claim 12, wherein the apex ridge of the angular plate structure is bonded to the screen panel.

23. The display screen according to claim 22, wherein the angular plate structure is provided with a third groove at the apex ridge along an extension direction of the apex ridge, and an adhesive is applied into the third groove; and
wherein the apex ridges on both sides of the third groove are able to fully and evenly contact the display screen over the entire length of the apex ridges.

24. The display screen according to claim 12, wherein the apex angle of the angular plate structure is not greater than 120°; the widths of two side walls of the angular plate structure are equal; and all angular plate structures are consistent in shape and size.

25. The display screen according to claim 12, wherein the screen panel comprises:
a display layer; and
a substrate layer, one side of the substrate layer is connected to the display layer, and the other side of the substrate layer is connected to the supporting structure.
